# EUROPÄISCHE PATENTANMELDUNG

(11) **EP 1 795 901 A2**
(43) Veröffentlichungstag der Anmeldung: **13.06.2007**
(21) Anmeldenummer: 06025615.3
(22) Anmeldetag: 11.12.2006
(51) Int. Cl.: G01P 1/07

(54) **Informationseinrichtung für den Führer eines Fahrzeugs**

(30) Priorität: 12.12.2005 DE 102005059216
(71) Anmelder: Michel, Ralf, 81547 München (DE)
(72) Erfinder: Michel, Ralf, 81547 München (DE)
(74) Vertreter: Winter, Brandl, Fürniss, Hübner Röss, Kaiser, Polte Partnerschaft Patent- und Rechtsanwaltskanzlei

(57) **Zusammenfassung**

Beschrieben wird eine Informationseinrichtung für den Führer eines Fahrzeugs, beispielsweise eines Motorrads, mit einer Einrichtung, welche geeignet ist, laufend mindestens eine physikalische Größe zu messen, mit der der Fahrzustand beschreibbar ist. Es ist ferner eine Verarbeitungseinrichtung vorgesehen, mit der die physikalische Größe zu zumindest einem Wert verarbeitbar ist, der eine Aussage über die auf das Fahrzeug wirkenden Kräfte erlaubt. Eine Anzeigeeinrichtung zeigt diese Werte an. Um es dem Fahrzeugführer mit geringem zusätzlichen technischen Aufwand zu ermöglichen, seine persönliche Fahrzeugbeherrschung momentan und/oder über der Zeit zu bewerten, ist zusätzlich eine Bewertungseinrichtung vorgesehen, mit der die zumindest eine physikalische Größe einem Vergleich mit einem Referenzwert unterzogen wird und mit der das Ergebnis dieses Vergleichs zur Anzeige bringbar ist. Es werden somit unter Berücksichtigung fahrzeuggeometrischer Parameter oder weiterer Messgrößen Performance-Indizes berechnet, die mittels der Anzeigeeinrichtung dargestellt werden. Als Ergebnis des Vergleichs ist also eine Information, wie z.B. über die Anzahl und/oder Art der gefahrenen Kurve(n) darstellbar ist und/oder eine quantitative und qualitative Aussage über die Fahrer-/Fahrzeugperformance möglich.

## Beschreibung

Die Erfindung betrifft eine Informationseinrichtung für den Führer eines Fahrzeugs, insbesondere eines Motorrads, mit der der Fahrzustand insbesondere bei Kurvenfahrten beschreibbar ist, gemäß dem Oberbegriff des Patentanspruchs 1.

Bekannte Vorrichtungen an Fahrzeugen informieren den Fahrzeugführer über die momentane Geschwindigkeit und die zurückgelegte Fahrstrecke (Tachometer), bei Kraftfahrzeugen ggfls. zusätzlich über die aktuellen Motorzustände (Drehzahl, Öl-/ Wassertemperatur, Kraftstoffverbrauch). Gespeichert werden - und abrufbar sind - ggfls. Durchschnitts- und Maximalgeschwindigkeiten sowie die zurückgelegte Wegstrecke und der Kraftstoffverbrauch (Bordcomputer).

Weitere bekannte Vorrichtungen an Fahrzeugen zur Messung von Beschleunigungen und Seitenneigungen nutzen ihre Informationen zur Steuerung von Bremsen, Motor und Fahrwerk der Fahrzeuge (ABS, ESP) oder zur Anzeige der momentan auf das Fahrzeug einwirkenden Kräfte (DE 4408606 C2).

Weitere bekannte Vorrichtungen, wie z.B. die Einrichtung gemäß EP 1 134 127 A2 informieren den Fahrzeugführer über die momentane Neigung seines Fahrzeugs . Wieder andere Geräte, wie z. B. in den Dokumenten DE 103 41 846 A1 und DE 199 49 548 A1 beschrieben, zeigen die Längs- und Querbeschleunigungen des Fahrzeugs an, wobei gegebenenfalls eine Korrelation dieser Anzeige mit Fahrbedingungen vorgenommen wird. Schließlich sind Vorrichtungen an Fahrzeugen bekannt, die den Fahrzeugführer über den Verlauf der zu fahrenden Strecke (Navigationsgeräte) informieren.

Aus dem Dokument DE 299 13 812 U1 ist eine Informationseinrichtung für den Führer eines Fahrzeugs, insbesondere eines Motorrads, bekannt, die mit einer Einrichtung, welche geeignet ist, laufend mindestens eine physikalische Größe (Quer- und/oder Längs- und /oder Vertikalbeschleunigung; Seitenneigung), mit der der Fahrzustand beschreibbar ist, zu messen, sowie mit einer Verarbeitungseinrichtung ausgestattet ist, mit der die physikalische Größe zu zumindest einem Wert verarbeitbar ist, der eine Aussage über die auf das Fahrzeug wirkenden Kräfte erlaubt. Diese Einrichtung speichert Messungen über die auftretenden Kräfte und ist in der Lage, den Fahrzeugführer über die aufgetretenen Beschleunigungen über eine Strecke und/oder ein Zeitintervall zu informieren.

Zur Lösung des Problems, dem Führer eines Fahrzeugs, insbesondere einem Motorradfahrer, eine Anzeige an die Hand zu geben, die diesem einen gewissen Anhaltspunkt über seine Fahrleistung beim Befahren einer Strecke gibt, ist aus dem Dokument DE 200 19 488 U1 eine Informationseinrichtung gemäß dem Oberbegriff des Patentanspruchs 1 bekannt.

Auch diese Vorrichtung ist aber hinsichtlich ihrer Funktion und Verwertungsmöglichkeit dahingehend beschränkt, dass sie nicht in der Lage ist, eine Aussage über die Qualität zu treffen, mit der ein Fahrzeugführer sein Fahrzeug beim Befahren einer Strecke oder über eine Zeitdauer beherrscht. Mit anderen Worten, auch diese bekannte Informationseinrichtung gestattet keine ausreichende quantitative und qualitative Bewertung der "Fahrzeug-Performance" im Zusammenspiel zwischen Fahrzeug, Fahrer, aufgetretenen Beschleunigungen und gefahrenen Kurven, und somit keine qualitative Aussage, wie schnell, wie eng, wie schräg ein Fahrzeugführer (eines Motorrads) einen Kurvenverlauf oder eine Strecke durchfahren hat.

Der Erfindung liegt deshalb die Aufgabe zugrunde, eine Informationsvorrichtung der eingangs beschriebenen Art in der Weise weiter zu entwickeln, dass sie es dem Fahrzeugführer mit geringem zusätzlichen technischen Aufwand ermöglicht, seine persönliche Fahrzeugbeherrschung momentan und/oder über der Zeit zu bewerten.

Diese Aufgabe wird durch die Merkmale des Patentanspruchs 1 gelöst.

Erfindungsgemäß wird durch die Bewertungseinrichtung die laufend gemessene physikalische Größe einem Vergleich mit einem speziellen Referenzwert unterzogen, nämlich mit einem frei wählbaren Bezugswert (a(ref)) der auf den Schwerpunkt des Fahrzeugs wirkenden Querbeschleunigung (a(I/r)) oder der Resultierenden (a(res)) aus Quer- und Längsbeschleunigung (a(+/-)), und der momentane Quotient, d.h. ein sogenannter Performance Index PI, aus dem Betrag der Querbeschleunigung oder der Resultierenden der Ist-Beschleunigungen und dem Bezugswert wird angezeigt.

Somit werden objektiv nachprüfbare und reproduzierbare Indizes über eine momentane Fahrer-/Fahrzeug-Performance (PI) gewonnen und zur Anzeige gebracht, wodurch es dem Fahrzeugführer erstmalig ermöglicht ist, seine Fahrzeugbeherrschung mit Kennwerten anderer Fahrer, Strecken, Fahrzeugen zu vergleichen und auf diese Weise seine persönliche Entwicklung der Fahrzeugbeherrschung zu verfolgen.

Mit der Erfindung wird also eine quantitative und qualitative Bewertung der Fahrzeug-"Performance" im Zusammenspiel zwischen Fahrzeug, Fahrer, aufgetretenen Beschleunigungen und gefahrenen Kurven ermöglicht, und somit eine qualitative Aussage, wie schnell, wie eng, wie schräg ein Fahrzeugführer (Motorrad) einen Kurvenverlauf oder eine Strecke durchfahren hat. Die erforderlichen Einrichtungen zur Erfassung der den Fahrzustand beschreibenden physikalischen Größen sind an sich bekannt, so dass der vorrichtungstechnische Mehraufwand begrenzt bleibt. Aufgrund der freien Wählbarkeit des Bezugswerts kann eine einfache Anpassung des Systems an fahrerbezogene (z.B. individuelle Leistungsgrenze) oder umgebungsbezogene (z.B. Fahrbahnzustand) Bedingungen erfolgen.

Die mit der Erfindung erzielten Vorteile liegen somit insbesondere darin, dass der Fahrzeugführer Informationen darüber gewinnt, inwieweit er die physikalischen Grenzen seines Fahrzeugs beim Beschleunigen bzw. Bremsen in Kurven (aber auch auf gerader Strecke) ausnützt. Er wird somit in die Lage versetzt, die Art und Qualität seiner Fahrzeugbedienung über den Verlauf der Kurvenfahrt zu erkennen, und mit anderen Fahrzeugführern und anderen Fahrzeugen zu vergleichen und Veränderungen über die Zeit bei der Fahrzeugbeherrschung festzustellen.

Mit der Weiterbildung der Ansprüche 2 oder 3 ergibt sich die Möglichkeit, die Aussage über die Fahrer-/Fahrzeug-Performance weiter zu differenzieren. Man erhält auf diese Weise eine zusätzliche Aussage über die Art der gefahrenen Kurven, d.h. ob schnell oder langsam oder bergauf oder bergab gefahren wird.

Wenn zusätzlich - gemäß Anspruch 4 - eine Einrichtung zur direkten und/oder indirekten Erfassung, Verarbeitung und ggf. Speicherung der Seitenneigung, insbesondere der Schräglage bei einspurigen Fahrzeugen, vorgesehen ist, wird dem Fahrer eine weitere, für ihn besonders interessante Information an die Hand gegeben. Denn die Seitenneigung eines Motorrads ist ein besonders aussagekräftiges Leistungs- und Vergleichskriterium. Die Seitenneigung kann auf verschiedene Art und Weise erfasst oder bestimmt werden, beispielsweise durch geeignete Verarbeitung der Ausgangssignale eines vorzugsweise raumfest gelagerten Querbeschleunigungsaufnehmers ggf. unter Heranziehung von Fahrzeugparametern, wie Schwerpunkthöhe, Radstand und Reifenbreite. Die Informationen über die Seitenneigung können auch direkt mittels eines Seitenneigungsmessers (z.B. optisch oder akustisch) gemessen werden.

Damit Strecken, Streckenabschnitte oder längere Fahr-Zeiträume ausgewertet werden können, ist die Weiterbildung des Anspruchs 5 von Vorteil. Der zur Abspeicherung vorgesehene und zur Auswertung benötigte Datensatz hat selbst dann, wenn mehrere physikalische Größen in sehr kurzen Zeitintervallen in der Größenordnung von Millisekunden, erfasst werden, ein Volumen, das ohne weiteres von herkömmlichen mit sehr kleinen Abmessungen bauenden Speichermedien bewältigt werden kann, die problemlos am Fahrzeug angebaut werden können.

Die Anzeigemöglichkeit nach Anspruch 6 oder 7 steigert den Informationsgehalt der Anzeige zusätzlich.

Zur weiteren Steigerung der Qualität der Aussage der erfindungsgemäßen Informationseinrichtung dient die Weiterbildung des Anspruchs 8. Ausgewählte Streckenabschnitte, z.B. Kurven oder Kurvenkombinationen oder Beschleunigungs- oder Bremsstrecken, können einer Feinbetrachtung, quasi "unter der Lupe", unterzogen werden. Auf diese Weise kann das Fahrverhalten noch genauer analysiert werden.

Die Weiterbildung des Anspruchs 9 erlaubt eine besonders attraktive Darstellung des zurückgelegten Streckenverlaufs. Die Fahrstrecke kann mit einer beispielsweise digitalisierten Landkarte abgeglichen werden, wobei die Möglichkeit eröffnet ist, die ermittelten Fahrzustandswerte in diese Darstellung einfließen zu lassen, beispielsweise durch Beschriftung oder farbliche Kennzeichnung, wie Einfärbung in Abhängigkeit von den Fahrzustandsparametern. Die damit erzielten Vorteile liegen insbesondere darin, dass der Fahrzeugführer Informationen darüber gewinnt, wie sich der Verlauf der zurückgelegten Strecke darstellt, und welche Performance-Indizes an jedem Punkt der Strecke auf sein Fahrzeug gewirkt haben und/oder wie die Performance über die gesamte Strecke war. Er wird dadurch in die Lage versetzt, verschiedene Strecken hinsichtlich des Schwierigkeitsgrads miteinander zu vergleichen, sich mit anderen Fahrzeugführern zu vergleichen, verschiedene Fahrzeuge miteinander zu vergleichen, und seine Entwicklung der Fahrzeugbeherrschung über die Zeit festzustellen. Die Aussagekraft der Information wird noch gesteigert, wenn die Informationseinrichtung zusätzlich über das Höhenprofil der zurückgelegten Strecke informiert.

Selbstverständlich sind diese Informationen nicht notwendigerweise laufend an den Armaturen des Fahrzeugs anzuzeigen. Es kann z.B. durch eine geeignete Menüführung dafür gesorgt werden, dass sich der Fahrer nur einen oder ausgewählte Werte durch die Informationseinrichtung laufend anzeigen lässt und dass die Streckenauswertung dann gesondert am Fahrzeug-Display oder im Zusammenwirken mit einem fahrzeugunabhängigen Computer vorgenommen wird.

Die notwendigen Einrichtungen zur Erfassung bzw. Messung, Verarbeitung, Speicherung und Anzeige der Informationen können von an sich bekannten herkömmlichen, beispielsweise elektronischen Komponenten gebildet sein, so dass der zusätzliche technische Aufwand minimal ist. Diese Bauelemente können jeweils einzelne Bauteile sein, die miteinander kommunizieren (auch kabellos), oder aber auch in einem Gerät verbaut sein. Darüber hinaus können auch bereits am Fahrzeug vorhandene geeignete Einrichtungen integriert werden (z.B. Geschwindigkeitsmesser, Beschleunigungssensoren, Displays).

Weitere Einzelheiten der Erfindung werden in den Figuren anhand von schematisch dargestellten Ausführungsbeispielen beschrieben.

Hierbei zeigen:
Figur 1 eine schematische Darstellung der Front eines Motorrads, das mit der erfindungsgemäßen Informationseinrichtung ausgestattet ist;
Figur 2 ein Diagramm zur Beschreibung der Arbeitsweise der Bewertungseinrichtung bei einer ersten Ausführungsform der Erfindung;
Figur 3 ein Ablaufdiagramm zur Erläuterung der Verarbeitung der Messwerte in der Informationseinrichtung gemäß der ersten Ausführungsform;
Figur 4 ein schematisches Schaubild zur Erläuterung der von der ersten Ausführungsform zur Verfügung gestellten Anzeige;
Figuren 5 bis 7 schematische Schaubilder zur Erläuterung der von der dritten Ausführungsform zur Verfügung gestellten Anzeige gemäß weiterer Varianten;
Figur 8 eine schematische Darstellung der Datenablage der Informationseinrichtung gemäß einer zweiten Ausführungsform der Erfindung;
Figur 9 ein Diagramm zur Erläuterung einer modifizierten Ausführungsform der Bewertungseinrichtung;
Figur 10 ein Ablaufdiagramm zur Erläuterung der Verarbeitung der Messwerte in der Informationseinrichtung gemäß einer vereinfachten Ausführungsform;
Figur 11 ein schematisches Schaubild zur Erläuterung der von der vereinfachten Ausführungsform zur Verfügung gestellten Anzeige; und
Figur 12 ein schematisches Schaubild zur Erläuterung der von einer abgewandelten Ausführungsform zur Verfügung gestellten Anzeige;

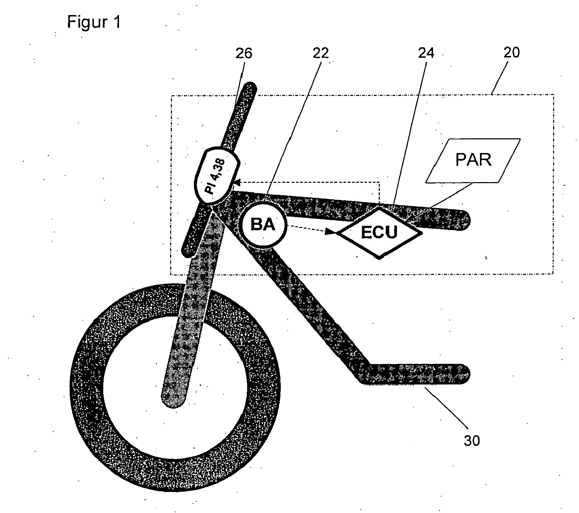

In Figur 1 ist am Beispiel der Ausstattung eines Motorrads 30 gezeigt, wie eine Informationseinrichtung 20 mit ihren Komponenten am Fahrzeug angebracht sein kann. Als Einrichtung, welche geeignet ist, laufend mindestens eine physikalische Größe (Quer- und/oder Längs- und/oder Vertikalbeschleunigung; Seitenneigung), mit der der Fahrzustand beschreibbar ist, zu messen, ist ein Beschleunigungsaufnehmer 22 vorgesehen. Der Beschleunigungsaufnehmer 22 ist vorzugsweise raumfest gelagert und somit in der Lage, die Querbeschleunigungen unabhängig von Fahrzeugneigungen quantitativ zu erfassen. Damit die Signalverarbeitung einfach wird, ist der Beschleunigungsaufnehmer 22 auf Höhe des Schwerpunkts befestigt. Die Signale des Beschleunigungsaufnehmers 22 weden auf eine ECU 24 gegeben, die die Funktion einer Verarbeitungseinrichtung, mit der die physikalische Größe zu zumindest einem Wert verarbeitbar ist, der eine Aussage über die auf das Fahrzeug wirkenden Kräfte erlaubt, und einer Bewertungseinrichtung erfüllt, mit der die zumindest eine physikalische Größe einem Vergleich mit einem Referenzwert unterzogen wird. Der Referenzwert ist in Figur 1 mit PAR bezeichnet. Er kann als Parametersatz in einem gegebenenfalls programmierbaren Lese- und Schreibspeicher abgelegt sein, der mit der ECU gekoppelt ist.

Mit dem Bezugszeichen 26 ist eine Anzeigeeinrichtung (Display) bezeichnet, die das Ergebnis des Vergleichs zur Anzeige bringt.

Nachstehend wird eine erste Ausführungsform der Erfindung beschrieben, bei der die Bewertung der zumindest einen laufend erfassten physikalischen Größe und die Auswahl des Referenzwerts auf eine solche Art und Weise erfolgt, dass die Aussagekraft der Anzeige besonders gesteigert ist. Der Referenzwert stellt einen frei wählbaren Bezugswert (a(ref)) entweder der auf den Schwerpunkt des Fahrzeugs wirkenden Querbeschleunigung (a(I/r)) oder der Resultierenden (a(res)) aus Quer- und Längsbeschleunigung (a(+/-)) dar.

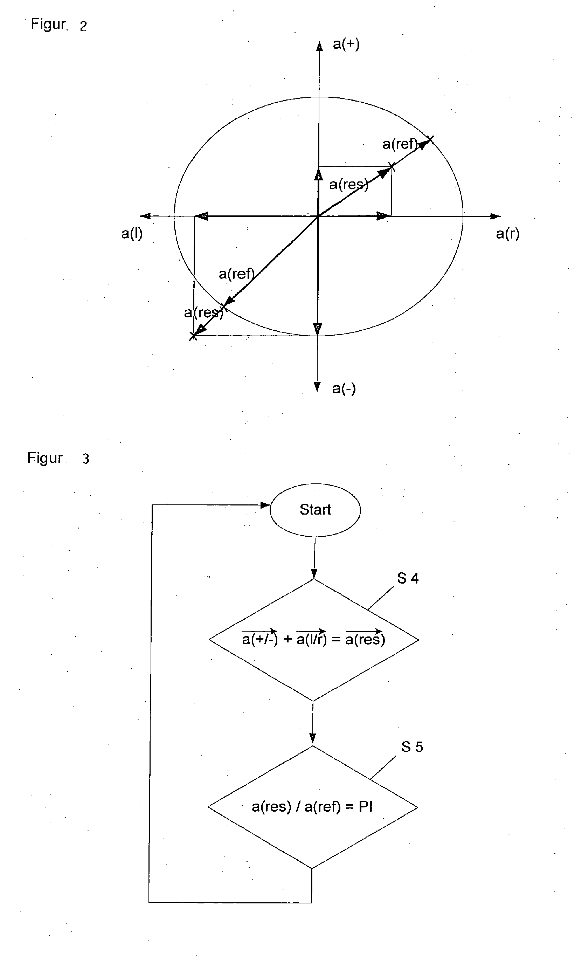

Zur Erläuterung wird auf Figur 2 Bezug genommen, welche in Vektordarstellung die auf das Motorrad einwirkenden Quer- und Längsbeschleunigungen zeigt. Die Querbeschleunigung ist auf der x-Achse, die Längsbeschleunigung auf der y-Achse aufgetragen. Mit der geschlossenen Linie ist der geometrische Ort (Refenzlinie) definiert, auf dem die Referenzwerte mit dem Betrag |a(ref)| liegen, die z.B. die theoretisch maximal erreichbaren resultierenden Beschleunigungen beschreiben.

Ein erster Fahrzustand, bei dem sich das Motorrad im Zustand einer Rechtskurve bei positiver Beschleunigung befindet, ist im I. Quadranten dargestellt. Die Resultierende a(res) der Beschleunigungen ergibt sich aus der Summe der Quer- und der Längsbeschleunigung. Der Referenzwert liegt auf dem Schnittpunkt des von der Resultierenden bestimmten Strahls der Referenzlinie. Im III. Quadranten ist ein Fahrzustand beschrieben, bei dem sich das Motorrad im Zustand einer Linkskurve bei negativer Beschleunigung befindet.

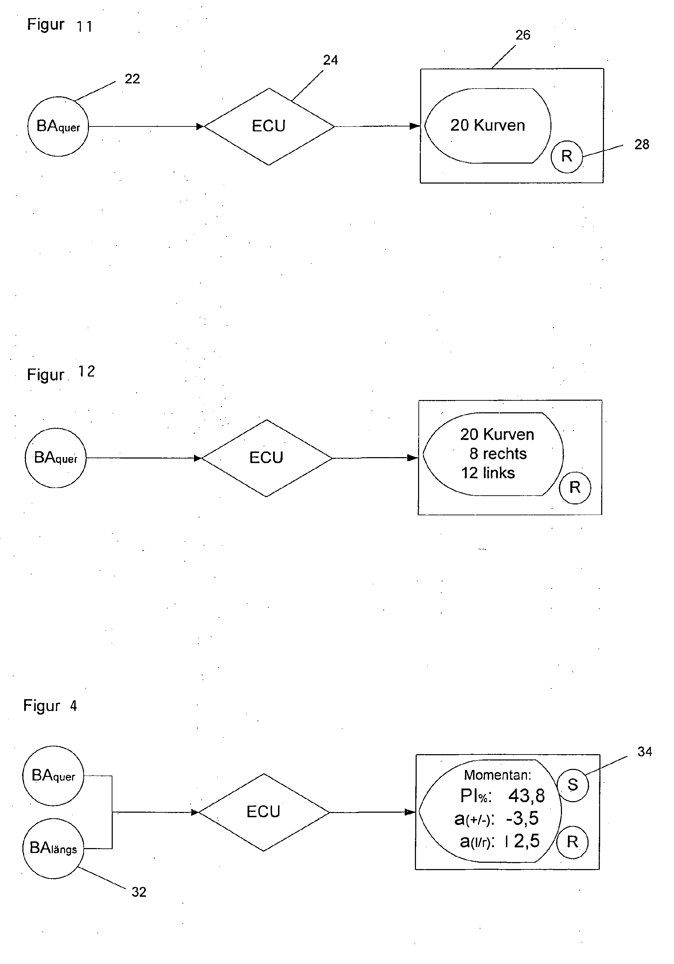

Die Verarbeitungs- und Bewertungseinrichtung arbeitet wie in Figur 3 dargestellt. Auch diese Routine wird in ausreichend kurzen Zeitabständen im ms-Bereich durchlaufen.

Ausgehend von START erfolgt im Schritt S4 eine Vektoraddition zur Ermittlung der Resultierenden a(res) der Beschleunigungen. Im Schritt S5 wird der Performance Index PI mittels Division von a(res) durch a(ref) ermittelt. Vorzugsweise werden die gemessenen Werte und die berechneten Werte laufend mit einem Zeitstempel abgelegt.

Wie aus Figur 2 ersichtlich, kann der Performance Index Pl - wie im III. Quadranten gezeigt - auch Werte >1 annehmen.

Figur 4 zeigt beispielhaft, wie ein Signalfluss und eine Darstellung des Performance Index PI aussehen kann. Zusätzlich zu einem Quer-Beschleunigungsaufnehmer 22 ist ein Längs-Beschleunigungsaufnehmer 32 vorgesehen. Auf dem Display 26 ist ein Selektschalter 34 zum Umschalten zwischen den Funktionen (z.B.: Anzahl Kurven, aktuelle Performance, maximale Performance, durchschnittliche Performance, Abruf von Einzelmeßwerten, wiederum aktuell, maximal, durchschnittlich) zusätzlich vorhanden.

Auf dem Display 26 werden beispielhaft die erreichten Performance-Indizes [PI] in % von den rechnerisch physikalisch möglichen erreichbaren Größen angezeigt.

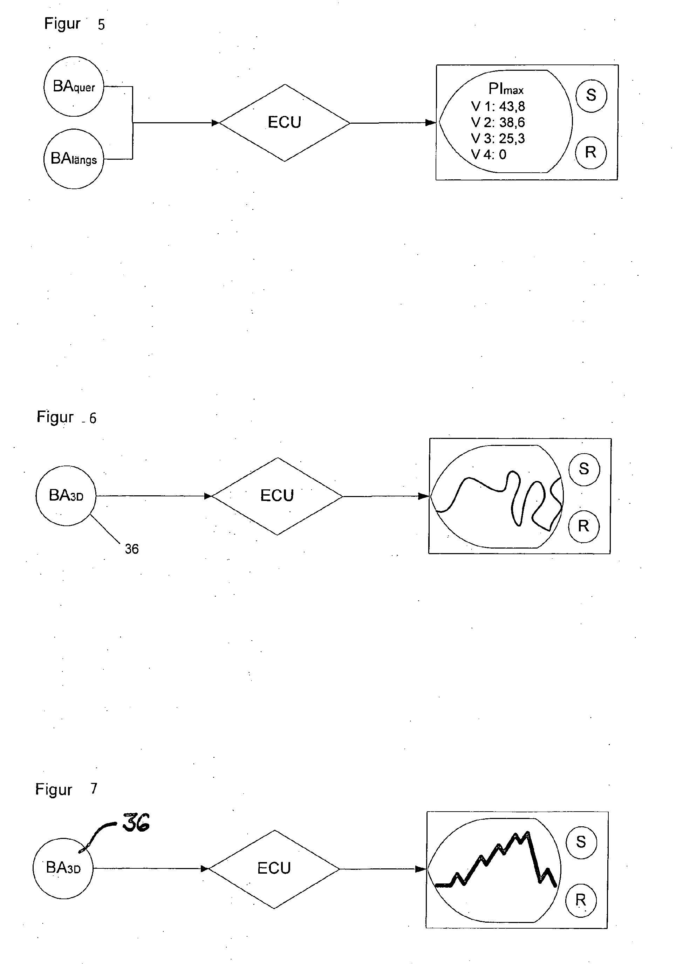

Figur 5 zeigt die Anzeige gemäß einer Variante, bei der die angezeigten Werte mit der momentanen Geschwindigkeit verknüpft sind. Es wird beispielsweise für verschiedene Geschwindigkeitskategorien V1 bis V4 der jeweils höchst Performance Index Pl angezeigt.

Zusätzlich kann eine Einrichtung zur direkten und/oder indirekten Erfassung, Verarbeitung und ggf. Speicherung der Seitenneigung, insbesondere der Schräglage bei einspurigen Fahrzeugen, vorgesehen sein. Das Display wird dann entsprechend erweitert, wobei über die Selecttaste 34 die betreffende Menuebene ausgewählt werden kann.

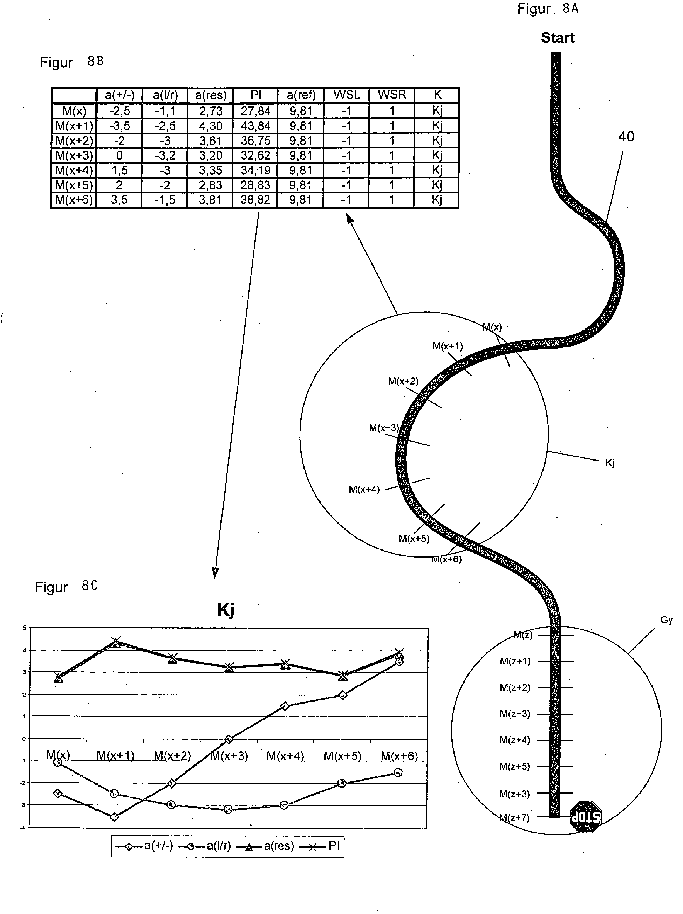

Die angezeigten Werte können gleichermaßen mit der momentanen Vertikalbeschleunigung in Bezug gesetzt werden. Hierzu ist die Variante nach Figur 7 in der Lage.

Es ist nunmehr ein 3-D-Beschleunigungsaufnehmer 36 vorgesehen, der wiederum raumfest, z.B. kardanisch, am Motorrad gelagert ist. Die angezeigten Werte können bei dieser Ausgestaltung mit Bezug auf die zugeordenete momentane Geschwindigkeit und/oder die zugeordnete momentane Vertikalbeschleunigung abgelegt werden.

Die Variante nach Figur 7 unterscheidet sich somit von der zuvor beschriebenen Ausgestaltung dadurch, dass zusätzlich zur Quer-/ und Längsbeschleunigung auch die vertikale Beschleunigung aufgezeichnet werden kann. Es ist somit möglich, auf dem Display 26 ein Streckenprofil darzustellen und dieses in Bezug zu allen anderen Werten zu setzen.

Die Variante gemäß Figur 6 zeigt ein zusätzlich erweiterte Funktion der Darstellung. Das Display zeigt eine Kartendarstellung des Streckenverlaufs.

Die Erfindung erlaubt es ferner, die Fahrer-/Fahrzeugperformance einer Feinanalyse zu unterziehen. Diese wird anhand der Figur 8 näher erläutert.

Es soll beispielsweise das Fahrverhalten auf der Strecke 40 (Figur 8A) im Bereich der Kurve Kj und der geraden Bremsstrecke Gy untersucht werden. Deshalb werden Messwerte M(x), M(x+1),..., M (x+n) - wie aus der Tabelle gemäß Figur 8B ersichtlich - zu einem Kurvendatensatz zusammengefasst. Dies gelingt durch die Auswertung der Querbeschleunigung a(I/r) unter Heranziegung von Schwellwerten WSL, WSR - wie weiter unten unter Bezug auf die Figur 10 noch beschrieben werden wird.

Auf der Basis der abgelegten Messwerte können Auswertediagramme - wie in Figur 8C beispielhaft dargestellt - gewonnen werden, die Aufschluss über das Fahrverhalten geben.

Entsprechendes gilt für die Feinanalyse des Streckenabschnitts Gy, für den ähnliche Datensätze erstellt und ausgewertet werden können.

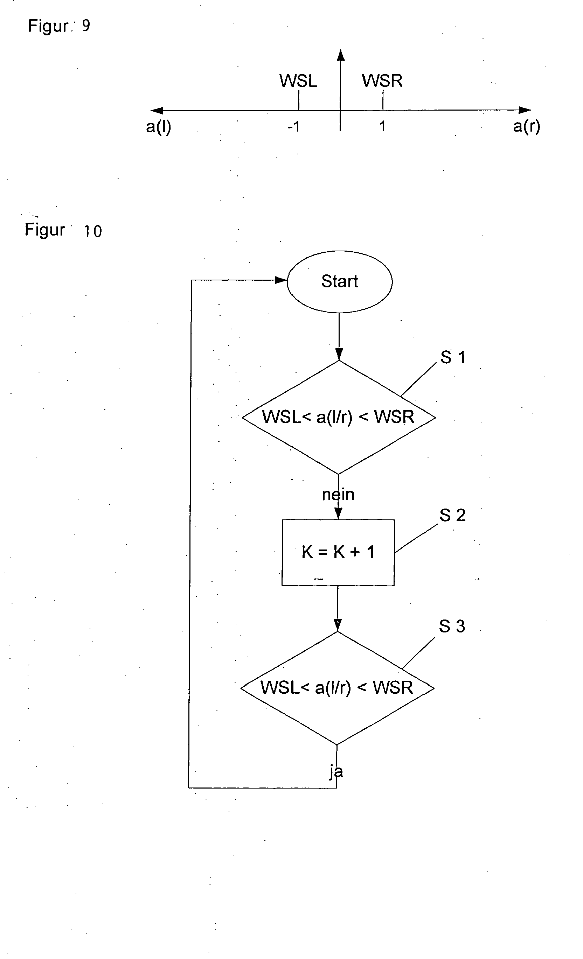

Im Folgenden wird anhand der Figuren 9 bis 11 die Arbeitsweise der Informationseinrichtung mit vereinfachter Funktion beschrieben:

Wie Figur 9 zeigt, wird lediglich die Querbeschleunigung a(I/r) laufend erfasst. Als Referenzwert dient bei dieser vereinfachten Ausführungsform ein linker und rechter Schwellwert WSL, WSR für die erfasste Querbeschleunigung, wobei die Größe des Schwellwerts vorzugsweise einstellbar ist, um die Sensibiltät des Systems einstellen zu können. Die Verarbeitung erfolgt nach dem Schema gemäß Figur 10, welches in regelmäßigen Zeitabständen von beispielsweise 1 ms durchlaufen wird.

Ausgehend von START erfolgt im Schritt S1 die Überprüfung, ob die Querbeschleunigung a(I/r) innerhalb der vorgegebenen Schwellwerte WSL, WSR liegt. Sobald das Querbeschleunigungsfenster zwischen WSL und WSR verlassen wird, geht das System zu Schritt S2, bei dem der Kurvenzählindex K um "1" erhöht wird. Im Schritt S3 wird wiederum überprüft, ob die Querbeschleunigung a(I/r) in den Bereich innerhalb der vorgegebenen Schwellwerte WSL, WSR zurück gekehrt ist. Sobald dies geschehen ist, kehrt die Routine zu START zurück.

Auf diese Weise können die vom Motorrad gefahrenen Kurven aufsummiert werden und wie in Figur 11 gezeigt, auf dem Display 26 dargestellt werden. Im gezeigten Beispiel ist das Motorrad über eine bestimmte Strecke 20 Kurven gefahren. Eine Resettaste 28 dient zur Nullstellung.

Eine Abwandlung dieser vereinfachten Ausführung ist in Figur 12 gezeigt, wobei gleiche Bestandteile nicht gesondert mit Bezugszeichen versehen sind.

Die Variante gemäß Figur 12 unterscheidet sich von der oben beschrchriebenen Ausführungsform dadurch, dass zwischen Links- und Rechtskurven unterschieden werden kann. Die Auswerteroutine für die Querbeschleunigung a(I/r) entspricht im Wesentlichen derjenigen der Figur 10, wobei lediglich eine Unterscheidung nach links und rechts getroffen wird.

Selbstverständlich sind Abwandlungen der gezeigten Ausführungsbeispiele möglich, ohne den Grundgedanken der Erfindung zu verlassen. So können die von den Sensoren erfassten Daten und Werte z.B. mit den Daten eines Navigationssystems abgeglichen und/oder kombiniert werden und zur Anzeige genutzt werden.

Die Ausgestaltung der Sensoren zur Erfassung der Beschleunigungswerte kann je nach dem, welche weiteren Parameter gemessen oder erfasst werden, in weiten Grenzen variieren. Wenn z.B. die Seitenneigung des Fahrzeugs beschleunigungs- oder geschwindigkeitsunabhängig erfasst bzw. gemessen wird (beispielsweise optisch oder akustisch), ist ein Querbeschleunigungssensor entbehrlich. Um eine zusätzlich Aussage über die Art der Kurve machen zu können, genügt die direkte oder indirekte (über die Beschleunigung) Erfassung der Fahrgeschwindigkeit.

Es ist auch möglich, dass eine Recheneinheit aus den zugeführten Werten die aktuelle Geschwindigkeit und die Querbeschleunigung ermittelt und über r = v²/a den Kurvenradius, sowie über tan α = a/g den rechnerischen Schräglagenwinkel α berechnet. Unter Berücksichtigung der individuellen Reifenbreite sowie des Radstandes und der Schwerpunkthöhe kann die Recheneinheit die tatsächliche Schräglage berechnen.

Unter Bezug auf die Figur 2 wurde die Referenzlinie beschrieben, mit der der Performance Index PI festgelegt wird. Die Referenzlinie kann ferner in jedem Quadranten I bis IV einen anderen Verlauf haben, sie kann aber auch als Kreislinie ausgebildet sein, z.B. als Kamm'scher Kreis. Es soll ferner hervorgehoben werden, dass diese Referenzlinie nach individuellen Bedürfnissen, Straßenverhältnissen, Witterungsbedingungen u.ä. frei wählbar sein kann. Unter Vorgabe einer Haftreibung µ von z.B. 0,9 von Gummi auf Asphalt lässt sich somit eine rechnerische maximale Performance ermitteln. Auf der Anzeige kann nun ein Performance-Index in % von der rechnerischen Maximalperformance angegeben werden und/oder ausgewählte Einzelmesswerte.

Es ist auch möglich, dass die ECU zur Auswahl der jeweils gewünschten und dann geltenden Referenzlinie herangezogen wird, z.B. in Abhängigkeit von Eingabeparametern wie Straßenzustand, Reifenzustand, Witterungsverhältnissen und eigenes Fahrvermögen.

Die Erfindung schafft somit eine Informationseinrichtung für den Führer eines Fahrzeugs, beispielsweise eines Motorrads, mit einer Einrichtung, welche geeignet ist, laufend mindestens eine physikalische Größe zu messen, mit der der Fahrzustand beschreibbar ist. Es ist ferner eine Verarbeitungseinrichtung vorgesehen, mit der die physikalische Größe zu zumindest einem Wert verarbeitbar ist, der eine Aussage über die auf das Fahrzeug wirkenden Kräfte erlaubt. Eine Anzeigeeinrichtung zeigt diese Werte an. Um es dem Fahrzeugführer mit geringem zusätzlichen technischen Aufwand zu ermöglichen, seine persönliche Fahrzeugbeherrschung momentan und/oder über der Zeit zu bewerten, ist zusätzlich eine Bewertungseinrichtung vorgesehen, mit der die zumindest eine physikalische Größe einem Vergleich mit einem Referenzwert unterzogen wird und mit der das Ergebnis dieses Vergleichs zur Anzeige bringbar ist. Es werden somit unter Berücksichtigung fahrzeuggeometrischer Parameter oder weiterer Messgrößen Performance-Indizes berechnet, die mittels der Anzeigeeinrichtung dargestellt werden. Als Ergebnis des Vergleichs ist also eine Information, wie z.B. über die Anzahl und/oder Art der gefahrenen Kurve(n) darstellbar ist und/oder eine quantitative und qualitative Aussage über die Fahrer-/Fahrzeugperformance möglich.

## Patentansprüche

1. Informationseinrichtung für den Führer eines Fahrzeugs, insbesondere eines Motorrads, mit
einer Einrichtung (22; 22,32;36), welche geeignet ist, laufend mindestens eine physikalische Größe (Quer- und/oder Längs- und /oder Vertikalbeschleunigung; Seitenneigung), mit der der Fahrzustand beschreibbar ist, zu messen,
einer Verarbeitungseinrichtung (24), mit der die physikalische Größe zu zumindest einem Wert verarbeitbar ist, der eine Aussage über die auf das Fahrzeug wirkenden Kräfte erlaubt, und
einer Bewertungseinrichtung (S1 bis S3; S4, S5), mit der die zumindest eine physikalische Größe einem Vergleich mit einem Referenzwert unterzogen wird und das Ergebnis (Anzahl Kurven; Anzahl und Richtung Kurven; Performance Index Pl) dieses Vergleichs zur Anzeige bringbar ist, **dadurch gekennzeichnet, dass** der Referenzwert ein frei wählbarer Bezugswert (a(ref)) der auf den Schwerpunkt des Fahrzeugs wirkenden Querbeschleunigung (a(l/r)) oder der Resultierenden (a(res)) aus Quer- und Längsbeschleunigung (a(+/-)) ist (z.B. auf einer Referenzlinie wie dem Kamm'schen Kreis liegend), und der momentane Quotient (Performance Index PI) aus dem Betrag der Querbeschleunigung oder der Resultierenden (a(res)) der Ist-Beschleunigungen und dem Bezugswert (a(ref)) angezeigt wird.

2. Informationseinrichtung nach Anspruch 1, **dadurch gekennzeichnet, dass** die angezeigten Werte (Plₘₐₓ bei V1, V2, V3, V4) mit der momentanen Geschwindigkeit in Bezug gesetzt werden, wobei die Momentangeschwindigkeit direkt oder indirekt erfasst wird.

3. Informationseinrichtung nach einem der Ansprüche 1 bis 2, **dadurch gekennzeichnet, dass** die angezeigten Werte mit der momentanen Vertikalbeschleunigung in Bezug gesetzt werden.

4. Informationseinrichtung nach einem der vorstehenden Ansprüche, **gekennzeichnet durch** eine Einrichtung zur direkten und/oder indirekten Erfassung, Verarbeitung und ggf. Speicherung der Seitenneigung, insbesondere der Schräglage bei einspurigen Fahrzeugen.

5. Informationseinrichtung nach einem der Ansprüche 1 bis 4, **gekennzeichnet durch** eine Speichereinrichtung (24), in die die zumindest eine physikalische Größe und das Ergebnis des Vergleichs mit dem Referenzwert laufend ablegbar ist.

6. Informationseinrichtung nach Anspruch 5, **dadurch gekennzeichnet, dass** die Werte mit Bezug auf die zugeordnete momentane Geschwindigkeit und/oder die zugeordnete momentane Vertikalbeschleunigung angezeigt und abgelegt werden.

7. Informationseinrichtung nach Anspruch 5 oder 6, **dadurch gekennzeichnet, dass** Mittelwerte und/oder Maximalwerte der abgelegten Werte der zumindest einen physikalische Größe und/oder das Ergebnis des Vergleichs mit dem Referenzwert darstellbar sind.

8. Informationseinrichtung nach einem der Ansprüche 1 bis 7, **dadurch gekennzeichnet, dass** mehrere hintereinander ermittelte Performance Indices (PI(x) bis PI(x+n)) kurven- oder streckenabschnittsbezogen ausgewertet werden und darstellbar sind.

9. Informationseinrichtung nach einem der Ansprüche 1 bis 8, **gekennzeichnet durch** eine Einrichtung, mit der zusätzlich der Streckenverlauf und/oder das Streckenprofil erfassbar und/oder darstellbar ist.

10. Informationseinrichtung nach einem der Ansprüche 1 bis 9, **dadurch gekennzeichnet, dass** die Anzeigeeinrichtung von einem Display (26) an einer Armatur des Fahrzeugs gebildet ist.

11. Informationseinrichtung nach einem der Ansprüche 1 bis 10, **dadurch gekennzeichnet, dass** die Anzeigeeinrichtung von einem Bildschirm gebildet ist, der von einem die abgespeicherten Daten benutzenden Computer angesteuert ist,
